# EUROPEAN PATENT APPLICATION

(11) **EP 4 692 705 A1**
(43) Date of publication of application: **11.02.2026**
(21) Application number: 24192848.0
(22) Date of filing: 05.08.2024
(51) Int. Cl.: F27B 7/20, C04B 7/47, F27D 17/10, F27D 17/15, F27D 17/20

(54) **CEMENT WASTE HEAT RECOVERY INTEGRATION WITH CARBON CAPTURE AND OPTIONAL COMPRESSION**

(71) Applicant: Siemens Energy Global GmbH & Co. KG, 81739 München (DE)
(72) Inventor: Kumar, Navlok, Abu Dhabi (AE); Kolhe, Pushkar, Abu Dhabi (AE); Alameri, Asmaa Fahad, Abu Dhabi (AE)

(57) **Abstract**

A waste heat recovery system for use with a cement production process with a carbon capture process includes a cement process preheater configured to receive flue gas from a kiln and supply preheater exhaust to a first waste heat recovery unit, a clinker cooler configured to discharge heated air to a second waste heat recovery unit, the second waste heat recovery unit including a burner, the second waste heat recovery unit configured to supply a high pressure steam flow to a steam turbine, the steam turbine configured to produce all of the electrical energy required a carbon capture process and output a third steam flow, the third steam flow supplies at least 80% of the heat energy required by the carbon capture process, the carbon capture process captures carbon dioxide from the exhaust gas of at least the first waste heat recovery unit via a sorbent media.

## Description

### BACKGROUND

The Carbon Capture and Storage (CCS) process is a very energy intensive process consuming energy in both electrical as well as thermal form. Thermal energy is required for regeneration of amine or any other sorbent where CO₂ is separated from sorbent-CO₂ bond. The generation of the required energy creates additional CO₂ emissions if the energy supplied is from a fossil fuel-based processes, which has the negative effect of reducing the net amount of carbon captured in a CCS process or plant.

US2013/0229012A1 discloses a post combustion carbon capture plant adapted for use with waste heat from a flue gas from a boiler of a power plant (electricity generation) located upstream from the carbon capture plant. The flue gas contains ash and requires the removal of ash via an electrostatic precipitator prior to entering the waste heat recovery unit of the carbon capture plant downstream of the power plant. The electricity required by the carbon capture plant is provided by the power plant and the waste heat recovery unit generates supplemental heat that is used for the regeneration process of the carbon capture plant. The carbon capture unit requires external energy (electrical or thermal) for operation, such as electricity from the power plant.

Most of CCS plants are currently under development or are being implemented in industries that produce a substantial amount of CO₂ as part of the core process as well as secondary processes, such as heating and production of steam. Reduction of CO₂ production is hard-to-abate in these types of industries or industrial processes because they inherently consume massive amounts of energy, with a significant portion of it being wasted or unrecoverable. Instead of wasting the heat produced by the heat sources (which consumes additional energy and water) of these industrial processes, the waste heat can be recovered to generate power in a waste heat recovery plant. Using heat recovery to generate the electricity or heat can be additionally used in a CCS process has the benefit of reducing the overall energy consumption for the CCS process, and consequently decreasing CO₂ emissions produced by the CCS process which increases the net amount of CO₂ captured by the CCS process.

The CCS process can require additional auxiliaries or secondary processes that also require electrical or mechanical energy and produce waste heat. One example is a compressor, which are generally a centrifugal, rotary, scroll, reciprocating or turbo compressor that is spun by an electric motor or turbine (or any known method of compression). Regardless of the method of compression used, the compressor used to compress CO₂ or other fluid in a CCS process will generate a significant amount of heat which will require a dedicated cooling system to maintain the compressor's operating efficiency. This energy can also be recovered using a heat pump to supply heat to the various operations of the CCS plant.

In conventional CCS plants, electricity is provided from captive power plants (CPP) or from the electrical grid. The heat required in the regeneration process of the sorbent (also known as the desorption process) is either supplied from a dedicated (fossil fuel-fired) boiler or via an electrical heater. In some concepts it has been envisaged to supply the process waste heat to reboilers using a HEX (heat exchanger) to supplement the boiler or reboiler used in the desorption process.

The present or conventional waste heat recovery (WHR) configurations currently in use or contemplated implement the WHR unit upstream of the CCS process. The WHR unit recovers the waste heat from an independent operation and converts up to 25% of the waste heat energy by generation of electricity and the rest of the waste heat energy is released to the atmosphere in condensers (air or water cooled). One disadvantage of this WHR configuration is that the amount of available waste heat energy is entirely dependent on the independent operation that generates the waste heat energy. Examples of the independent operations include steel mills, foundries, and cement plants. The operational schedule and the amount of waste heat energy can vary depending on operating capacity or seasonal demand. When waste heat is not available or not sufficient to operate the CCS process conventional heaters or boilers are needed to replace or compensate for the lack of waste heat or insufficient waste heat for independent operation. Depending on the amount of waste heat available, a CCS process can be required to operate a heater or boiler, which require power from a combined heat and power (CHP) plant or directly consume a fossil fuel.

In these CCS configurations that compress the CO₂ that is captured, the heat generated during the compression of the CO₂ or compression heat is rejected or transferred to a cooling water flow in the intercoolers or other type of heat exchanger. The rejected heat is released to the atmosphere via heat transfer in cooling towers, air fin coolers, etc. These water-based cooling methods also have the disadvantage of requiring and consuming a significant amount of water, for example evaporative water cooling as water is released to the atmosphere. In some prior art applications, it has been proposed to utilize the flue gas waste heat for the sorbent regeneration process. In some cases, the steam from a (fossil fuel or waste fuel fired) CHP plant is provided to the CCS process. However, in these concepts the above-mentioned disadvantages are still present, particularly the availability and maximum recovery of the waste heat.

In cement plants that utilize a cyclone preheater or preheater as it is commonly known, high temperature flue gas from the kiln is circulated through the preheater. The preheater exhaust can be sent to a waste heat recovery (WHR) unit or auxiliary boiler but the temperature of the preheater exhaust is typically below 500°C, and a secondary or auxiliary burner is required to generate usable steam, even at low to medium pressures required by steam turbines. Clinker or cement clinker exits the kiln and can enter a clinker cooler at a temperature of around 1000-1400°C. Inside the clinker cooler air flow is used to cool the clinker until it reaches a temperature below 200°C. The exhaust of the clinker cooler (hot air) can be directed to a WHR unit but again it lacks sufficient heat energy due to the low temperature and again a secondary burner is needed to produce a sufficient, (large quantity) amount of usable steam.

A prior art study suggests using waste heat from cement production to power a CCS system. Key heat sources identified were kiln flue gas and clinker cooling air, which can be harnessed through flue gas heat recovery boilers. As waste heat alone would not be sufficient for amine regeneration (desorption), an auxiliary boiler would be installed to supplement the required thermal energy. Additionally, duct firing was proposed to increase the temperature of flue gas exiting from the preheater tower, enhancing heat recovery. The recovered heat can be used to generate medium-pressure steam for electricity production for the capture plant and amine regeneration. However, as preheater gas has very low Oxygen content, duct firing would require introducing additional air for complete combustion which would increase the amount of flue gas handled by CCS plant. This example would increase CO₂ production by operation of the auxiliary boiler(s) and the additional air that it introduced in the post preheater duct burner.

In prior art cement plants Lime, calcium oxide (CaO), is used to capture carbon from flue gas and the Lime is converted back to limestone, calcium carbonate (CaCO₃). This limestone is then mixed with the rest of the feed materials or raw meal required to produce cement clinker, an intermediary in the production of portland cement. This type of carbon capture incorporates the regenerative calcium cycle and requires multiple gas-to-gas heat exchangers to generate the heat required for calcination and lime regeneration. However, despite the use of multiple heat exchangers, additional fans and fuel firing is required to supply the heat required for calcination without any additional utility such as electricity or hot water/process steam being generated by the additional energy consumed by the cement plant. This makes carbon capture by regenerative calcium cycle energy intensive and not suitable for large cement plant due to size limitation of Gas-to-Gas heat exchangers.

### SUMMARY OF INVENTION

It is therefore a goal of the present invention to provide a waste heat recovery process for use with a cement process plant that is combined with a carbon capture process which overcomes the above-mentioned disadvantage(s). The present invention overcomes the disadvantages in a cement process plant that includes a carbon capture process that uses a separate boiler or fuel based heating to produce the heat energy and electrical energy required by a carbon capture process, specifically the heat energy and electrical energy required by the carbon capture process are generated without increasing the net amount of carbon emissions.

The objective of the invention is achieved by, a waste heat recovery system for use with a cement production process includes a cement process preheater configured to discharge a first recovery flow, a clinker cooler configured to discharge a second recovery flow, a carbon capture process configured to extract CO₂ from at least the first recovery flow, a first waste heat recovery unit configured to receive a first fluid flow, a second waste heat recovery unit configured to receive a second fluid flow, the first waste heat recovery unit configured to receive the first recovery flow and heat the first fluid flow, the second waste heat recovery unit configured to receive the second recovery flow and heat the second fluid flow, the first heat recovery unit configured to receive the first fluid flow and output a first steam flow, the second heat recovery unit configured to receive the second fluid flow and output a second steam flow, a steam turbine configured to receive at least the second steam flow, the steam turbine configured to output a third steam flow, the steam turbine configured to produce at least 100% of the electrical energy requirements of the carbon capture process by spinning a generator and at least 80% of the heat energy requirements of the carbon capture process from the third steam flow. The first fluid flow and second fluid flow can advantageously be the same circuit of fluid that is circulated to the first and second waste heat recovery units.

In one embodiment of a waste heat recovery system for use with a cement production process includes a cement process preheater configured to discharge a first recovery flow, a clinker cooler configured to discharge a second recovery flow, a carbon capture process configured to extract CO₂ from at least the first recovery flow, a second waste heat recovery unit configured to receive a second fluid flow, the second waste heat recovery unit configured to receive the second recovery flow and heat the second fluid flow, the second waste heat recovery unit configured with a supplementary firing provision, the second heat recovery unit configured to receive the second fluid flow and output a second steam flow, a steam turbine configured to receive at least the second steam flow, the steam turbine configured to output a third steam flow, the steam turbine configured to produce at least 100% of the electrical energy requirements of the carbon capture process by spinning a generator and at least 80% of the heat energy requirements of the carbon capture process from the third steam flow. The configuration of a cement process plant may not allow for a waste heat recovery unit configured to receive the preheater exhaust flow. Alternatively, the preheat exhaust flow may not be at an adequate temperature to justify the expense of a waste heat recovery unit. The WHR with burner can advantageously be used independently to supply the carbon capture process with electricity and heat energy while still allowing for the carbon capture process to extract carbon dioxide from the preheat exhaust flow.

In one embodiment of the waste heat recovery system may also include wherein the second waste heat recovery unit further includes a supplementary firing provision. The supplementary firing provision can advantageously be a boiler or any other known method or apparatus of generating heat energy. The inclusion of a boiler in the second waste heat recovery unit advantageously reduces the amount of fuel required to generate the second steam flow by recovering the waste heat from the clinker cooler, which reduces the amount of additional carbon emissions required to support the carbon capture process when a carbon emission generating fuel is used in the boiler. Additionally, the clinker cooler exhaust and second waste heat recovery unit exhaust can be sent to the carbon capture process.

In one embodiment of the waste heat recovery system may also include wherein the second recovery flow is at a temperature between 260-380°C. The standard or end exhaust of the clinker cooler can advantageously supply a recovery flow at these temperatures.

In one embodiment of the waste heat recovery system wherein the second waste heat recovery unit produces high pressure and super heated steam. The high pressure and super heated steam flow or second steam flow is advantageously used to operate the steam turbine.

In one embodiment of the waste heat recovery system may also include wherein the second waste heat recovery unit is configured to receive the first steam flow, and an amount of fuel required by the supplementary firing provision to produce the second steam flow is supplemented by the heat energy of the first steam flow. The steam turbine may advantageously be configured to receive only a high pressure and super heated steam flow, where the first steam flow is used to supplement the heat energy requirements of the second waste heat recovery unit, reducing the amount of fuel required to generate the second steam flow.

In one embodiment of the waste heat recovery system may also include wherein the steam turbine is configured to receive the first steam flow at a first temperature and a first pressure, and the steam turbine is configured to receive the second steam flow at a second temperature and a second pressure. The first steam flow may advantageously be a low or intermediate pressure steam flow.

In one embodiment of the waste heat recovery system may also include wherein the supplementary firing provision is firing a carbonized fuel and the carbon capture process extracts carbon dioxide from the WHR exhaust of the second waste heat recovery unit. The carbonized fuel may advantageously be natural gas, coal, or other hydrocarbon. The carbon capture process can be configured to extract carbon dioxide from the WHR exhaust advantageously reducing the carbon emissions of the cement process plant and carbon capture process.

In one embodiment of the waste heat recovery system may also include wherein the carbonized fuel is a low carbon fuel. The carbonized fuel may advantageously be hydrogen or a biofuel.

In one embodiment of the waste heat recovery system may also include wherein the clinker cooler further includes a mid-point outlet configured to provide the second heat recovery unit with the second recovery flow. A mid-point outlet may advantageously be used to access higher temperature clinker cooler exhaust which further reduces the amount of heat energy required to produce the second steam flow by the second waste heat recovery unit.

In one embodiment of the waste heat recovery system may also include wherein the second recovery flow is at a temperature between 300-600°C. The mid-point clinker cooler exhaust is at a higher temperature than an endpoint clinker cooler exhaust.

In one embodiment of the waste heat recovery system may also include wherein a de-duster conditions the second recovery flow prior to entering the second waste heat recovery unit. The de-duster advantageously conditions the clinker cooler exhaust prior to firing in the second waste heat recovery unit.

In one embodiment of the waste heat recovery system may also include a plurality of dampers configured to control the first recovery flow and the second recovery flow, as required by the carbon capture process. The damper advantageously operate as valves to control the flow of the various exhaust and recovery flows as required by the carbon capture process and cement process plant.

In one embodiment of the waste heat recovery system may also include wherein the carbon capture process further comprises a sorbent media that undergoes an absorption cycle to capture CO₂ and a desorption cycle to release and capture the CO₂ from the sorbent media.

In one embodiment, a method for waste heat recovery and carbon capture for use with a cement process plant consisting of the steps of configuring a cement preheater to output a first recovery flow, configuring a clinker cooler to output a second recovery flow to a second waste heat recovery unit, configuring a carbon capture process to capture CO₂ from at least the first recovery flow, configuring the second waste heat recovery unit to heat a second fluid flow and output a second steam flow, configuring a steam turbine to receive at least the second steam flow and generate all of the electrical requirements of a carbon capture process by spinning a generator, configuring the steam turbine to output a third steam flow, providing at least 80% of the heat energy requirements of the carbon capture process from the third steam flow.

In one embodiment of the method for waste heat recovery and carbon capture may also include the steps of configuring the cement preheater to output the first recovery flow to a first waste heat recovery unit, configuring the first waste heat recovery unit to heat a first fluid flow and output a first steam flow, where the second waste heat recovery unit is configured to receive the first steam flow, and an amount of fuel required by the supplementary firing provision to produce the second steam flow is supplemented by the heat energy of the first steam flow.

In one embodiment of the method for waste heat recovery and carbon capture may also include the steps of configuring the cement preheater to output the first recovery flow to a first waste heat recovery unit, configuring the first waste heat recovery unit to heat a first fluid flow and output a first steam flow, configuring the steam turbine to receive the first steam flow at a first temperature and a first pressure, and configuring the steam turbine to receive the second steam flow at a second temperature and a second pressure.

Other technical features may be readily apparent to one skilled in the art from the following figures, descriptions, and claims.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an embodiment of a cement process plant with heat recovery and carbon capture with a two-stage steam turbine.
FIG. 2 illustrates an embodiment of a cement process plant with heat recovery and carbon capture with a single stage steam turbine.
FIG. 3 illustrates an embodiment of a cement process plant with heat recovery and carbon capture with a two-stage steam turbine and a mid-point output clinker cooler.
FIG. 4 illustrates an embodiment of a cement process plant with heat recovery and carbon capture with a single stage steam turbine and a mid-point output clinker cooler.
FIG. 5 illustrates an embodiment of a cement process plant with heat recovery and carbon capture with only a WHR unit with burner.
FIG. 6 illustrates an embodiment of a cement process plant with heat recovery and carbon capture that includes a secondary exhaust.

### DETAILED DESCRIPTION

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to apparatus and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus.

It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

Also, it should be understood that the words or phrases used herein should be construed broadly, unless expressly limited in some examples. For example, the terms "including," "having," and "comprising," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

Also, unless specified or limited otherwise, the terms "mounted", "connected", "supported", and "coupled" and variations thereof are used broadly and encompass direct and indirect mountings, connections, supports, and couplings. Further, "connected" and "coupled" are not restricted to physical or mechanical connections or couplings.

In addition, the term "adjacent to" may mean: that an element is relatively near to but not in contact with a further element; or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard as available a variation of 20 percent would fall within the meaning of these terms unless otherwise stated.

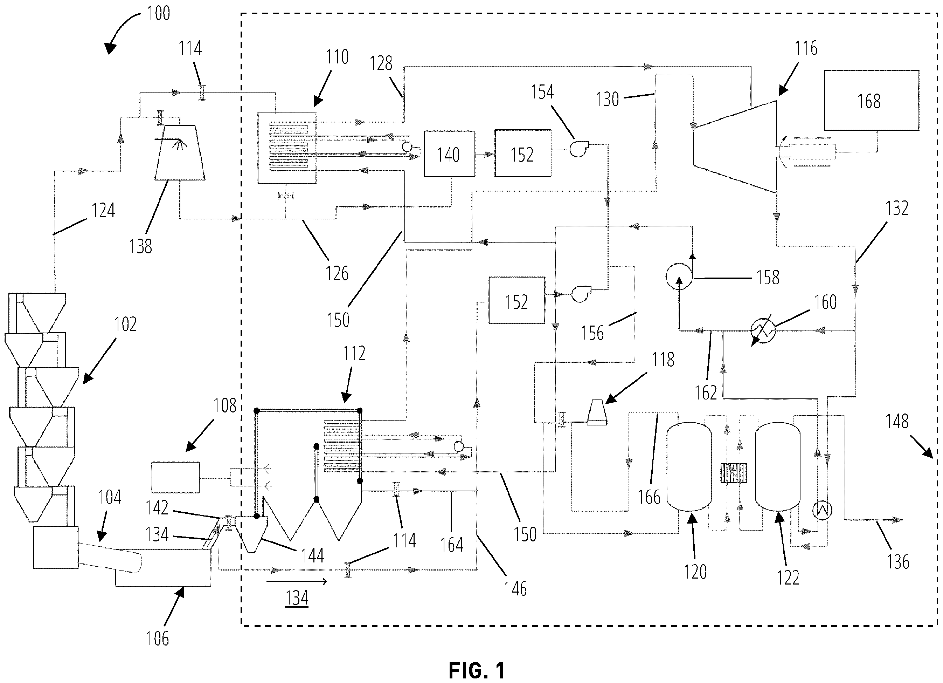

FIG. 1 is a cement process plant 100 in accordance with one embodiment. The cement process plant 100 can be subdivided into two processes, the operations and processes required for the production of cement and the carbon capture unit 148 with heat recovery, seen within the dashed box in FIG. 1. A kiln 104 is used to fire the raw mill and produce clinker that exits the kiln 104 and enters the clinker cooler 106 at a temperature between 1000-1400°C. The clinker cooler 106 includes a number of intake fans that feed atmospheric air into the clinker cooler 106 to cool the clinker that enters the clinker cooler 106 from the kiln 104, or other known air intake configuration for a clinker cooler 106.

In the embodiment of FIG. 1 the heated air, atmospheric air that has cooled the clinker, exits the clinker cooler 106 at a CC outlet 142 which is located at substantially the opposite end of the clinker cooler 106 along the horizontal axis from the interface between the clinker cooler 106 and the kiln 104. The temperature of CC exhaust 134 at the CC outlet 142 is between 260-380°C depending on the production requirements of the cement process plant 100. The CC outlet 142 is connected to a de-duster 144 that conditions the CC exhaust 134 prior to entering the WHR unit with burner 112. The WHR unit with burner 112 has a supplementary firing provision 108 which in this embodiment is a burner that burns natural gas or other fuel with a sufficient firing temperature needed to produce super heated steam, including low carbon fuels. There is a damper 114 or valve in-between the CC outlet 142 and the de-duster 144, dampers 114 are located at the outlet of the WHR unit with burner 112 and in the exhaust piping 146 to control the flow of CC exhaust 134 through the WHR unit with burner 112 as required by the carbon capture process 148. The CC exhaust 134 can bypass the WHR unit with burner 112 via the exhaust piping 146 depending on the temperature/heat requirements of the carbon capture process 148 or cement process plant 100. In one embodiment the CC exhaust 134 is diverted to the WHR unit with burner 112 to produce second steam flow 130 in combination with first steam flow 128 produces all of the electrical energy required by the carbon capture process 148 (via the steam turbine 116) and at least 80% of the heat energy required by the carbon capture process 148, particularly the desorption unit 122, via the heat energy in the third steam flow 132. The carbon capture process 148 produces a flow of carbon dioxide gas 136.

The heated air from the clinker cooler 106 that does not exit the clinker cooler 106 via the CC outlet 142 is fired in the kiln 104 and then enters the cement preheater 102 and warms the raw mill as it moves down the various stages of the cement preheater 102. The preheat exhaust flow 124 exits the highest or first stage of the cement preheater 102 and enters a gas conditioning tower 138 or a preheater WHR unit 110 depending on the operation of the dampers 114 as required by the requirements of the carbon capture process 148. The preheat exhaust flow 124 has a temperature between 260-480°C, depending on the requirements of the carbon capture process 148 or cement process plant 100. The preheat exhaust flow 124 that enters the preheater WHR unit 110 heats a first water flow 150 and produces a first steam flow 128. The first water flow 150 enters the preheater WHR unit 110 at a temperature between 50-130°C and a pressure between 6-70 bar(a). The first steam flow 128 exits the preheater WHR unit 110 at a temperature between 200-420°C and a pressure between 10-30 bar(a). The preheat exhaust flow 124 that has exited the preheater WHR unit 110 and or the gas conditioning tower 138 is used to dry the raw mill in the raw mill dryer 140 prior to the raw mill entering the cement preheater 102. After exiting the raw mill dryer 140 the cooled preheat exhaust flow 126 enters a PCE 152 or pollution control equipment which can be an Electrostatic Precipitator (ESP) or Fabric Filter (FF) / Bag Filter (BF) or any other known method. The cooled preheat exhaust flow 126 is then sent to the absorption unit 120 or the exhaust stack 118 depending on the operation of the carbon capture process 148 as an exhaust gas 156 with a temperature between 60-180°C. The exhaust gas 156 that is diverted to the absorption unit 120 exits the absorption unit 120 at a temperature between 60-100°C.

The first water flow 150 enters the WHR unit with burner 112 at a temperature between 50-130°C and a pressure between 6-70 bar(a). The second steam flow 130 exits the WHR unit with burner 112 at a temperature between 450-520°C and a pressure between 40-70 bar(a). In this embodiment the first water flow 150 is also used to produce the first steam flow 128 in the preheater WHR unit 110. The first water flow 150 is circulated via pump 158 after it has been discharged from the heat exchanger of desorption unit 122 as post desorption water flow 162 at a temperature between 50-130°C and a pressure between 3-8 bar(a). The third steam flow 132 is circulated to the heat exchanger of the desorption unit 122 at a temperature between 130-160°C and a pressure between 3-8 bar(a). A control valve 160 can be used to control the flow of the third steam flow 132 by diverting an amount of the third steam flow 132.

The CC exhaust 134 exits the WHR unit with burner 112 as WHR exhaust 164 at a temperature between 80-150°C. The CC exhaust 134 that is diverted to the exhaust piping 146 and WHR exhaust 164 are circulated through a PCE 152 prior to being sent to the absorption unit 120 or exhaust stack 118. The CC exhaust 134, WHR exhaust 164 and cooled preheat exhaust flow 126 are combined into an exhaust gas 156 flow with a temperature range of 60-180°C. The exhaust gas 156 that is not vented out of the exhaust stack 118 exits the absorption unit 120 as post absorption exhaust 166 with a temperature between 60-100°C.

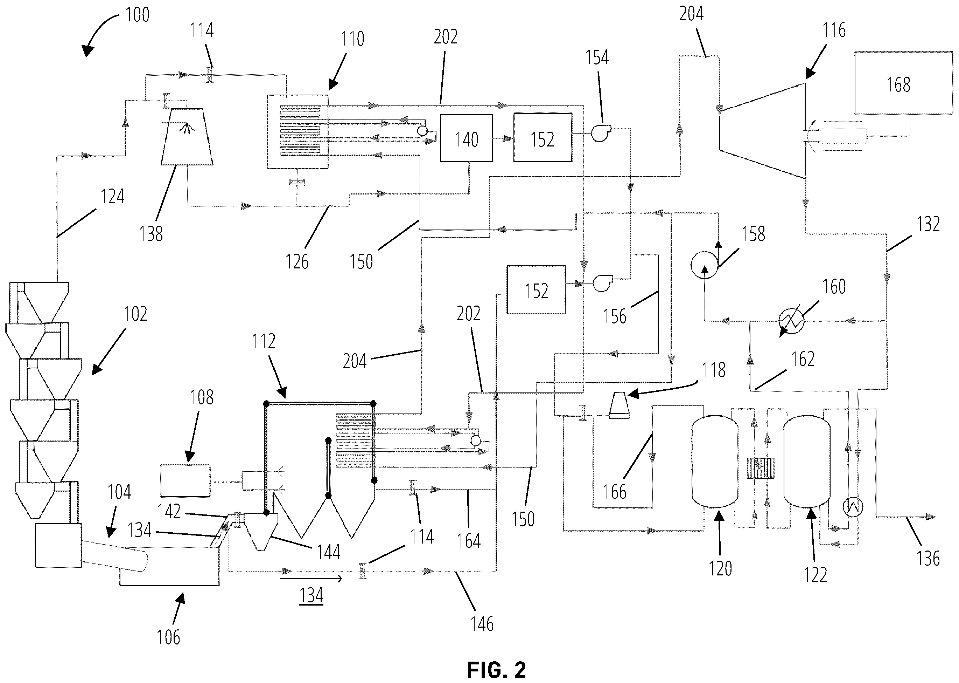

In FIG. 2 an embodiment of a cement process plant 100 can be seen. In this embodiment the preheater WHR unit 110 produces an intermediate steam flow 202 at a temperature between 200-250°C and a pressure between 40-70 bar(a). The intermediate steam flow 202 is circulated to the WHR unit with burner 112 and supplements the steam generated by the WHR unit with burner 112 at a point of the same or substantially the same temperature and pressure within the WHR unit with burner 112. The WHR unit with burner 112 produces a high pressure steam flow 204 at a temperature between 450-520°C and a pressure between 40-70 bar(a). In this embodiment the steam turbine 116 has a single input of the high pressure steam flow 204 and outputs a third steam flow 132 at a temperature between 130-160°C and a pressure between 3-8 bar(a). This embodiment requires less fuel to produce the high pressure steam flow 204 as the preheater WHR unit 110 supplies an amount of intermediate steam flow 202 directly into the WHR unit with burner 112.

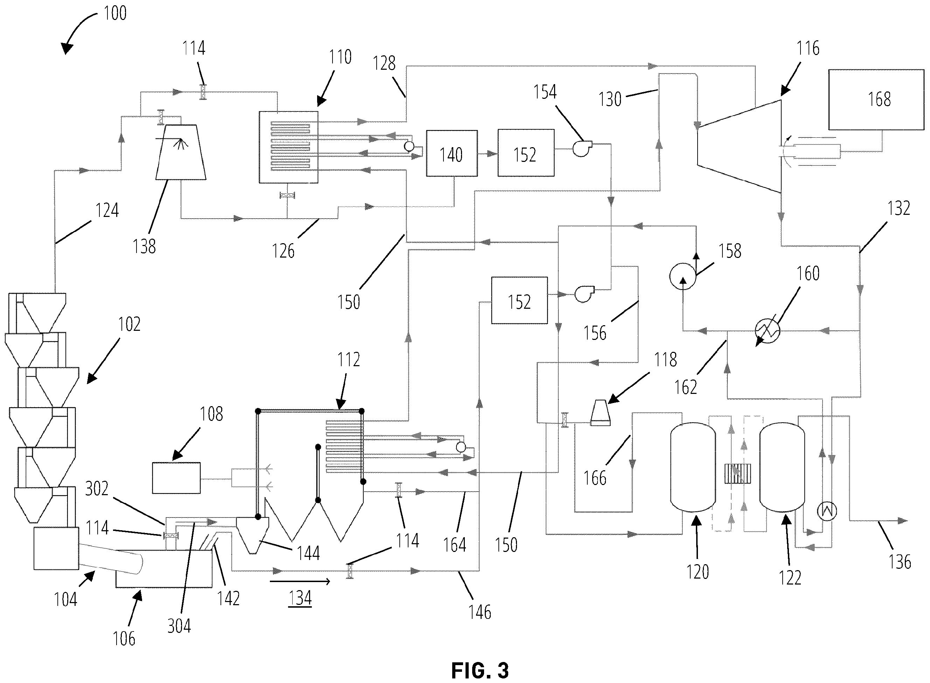

FIG. 3 is an embodiment of a cement process plant 100 that is equip with a clinker cooler 106 that allows for a mid-point outlet 302. The WHR unit with burners 112 is supplied with mid-point CC exhaust 304 at a temperature between 300-600°C. This configuration requires less fuel to produce the second steam flow 130 at a temperature between 450-520°C and a pressure between 40-70 bar(a). The flow rate of the mid-point CC exhaust 304 can be controlled with the dampers 114 as required by the operation of the carbon capture process 148.

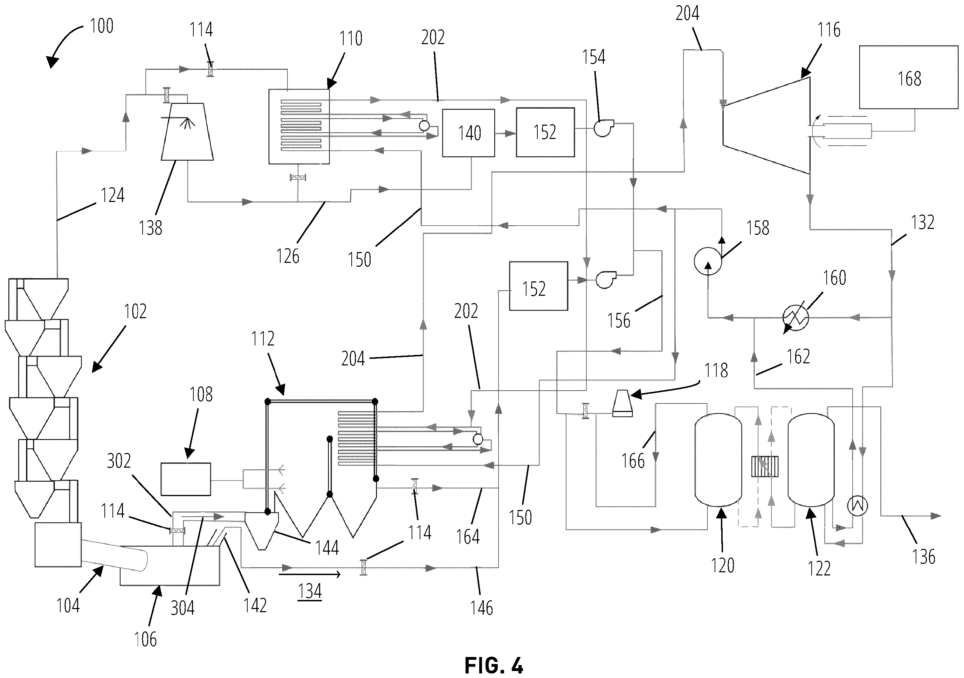

FIG. 4 is an embodiment of a cement process plant 100 that is equip with a clinker cooler 106 that allows for a mid-point outlet 302. The WHR unit with burners 112 is supplied with mid-point CC exhaust 304 at a temperature between 300-600°C. This configuration requires less fuel to produce the high pressure steam flow 204 at a temperature between 450-520°C and a pressure between 40-70 bar(a). The flow rate of the mid-point CC exhaust 304 can be controlled with the dampers 114 as required by the operation of the carbon capture process 148.

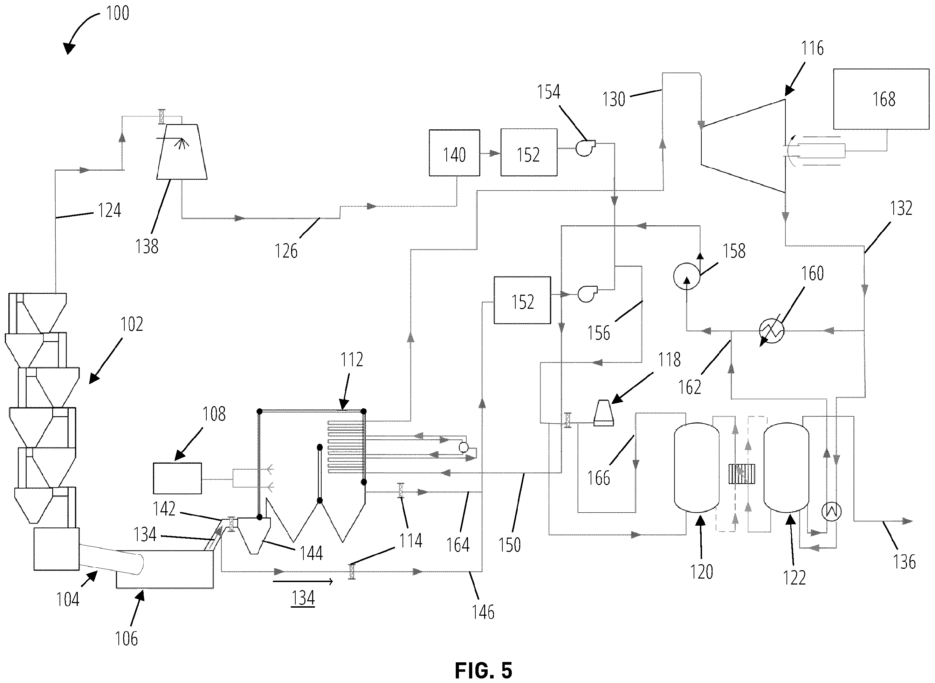

FIG. 5 is an embodiment of the present invention that only has a WHR unit with burner 112 to recover the heat energy from the clinker cooler 106. The preheat exhaust flow 124 is sent to a gas conditioning tower 138 prior to being sent to the carbon capture process 148 or the exhaust stack 118. This configuration may be desirable in cement process plants 100 where the preheat exhaust flow 124 does not exit at a temperature necessary for operation of a preheater WHR unit 110 or other logistical limitations, such as cost and available real-estate. The embodiment of FIG. 5 is shown with the CC outlet 142 located at the end of the clinker cooler 106 but the cement process plant 100 can be configured with a mid-point outlet 302.

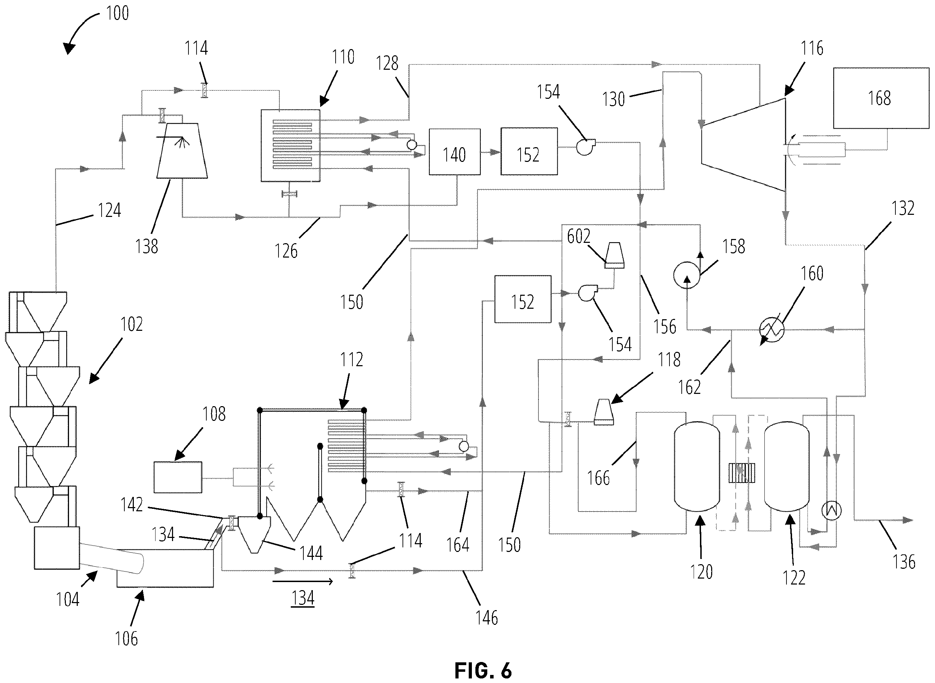

FIG. 6 is an embodiment of the present invention where the supplementary firing provision 108 or burner of the WHR unit with burner 112 burns a low carbon or non-carbon (zero) emission producing fuel, such as hydrogen or a biofuel. As a result, carbon dioxide does not need to be captured from the WHR exhaust 164 of this embodiment and is vented to secondary exhaust 602. Only the cooled preheat exhaust flow 126 needs to be circulated to the carbon capture process 148. The embodiment of FIG. 6 is shown with the CC outlet 142 located at the end of the clinker cooler 106 but the cement process plant 100 can be configured with a mid-point outlet 302.

Although various embodiments that incorporate disclosed concepts have been shown and described in detail herein, those skilled in the art can readily devise many other varied embodiments that still incorporate these disclosed concepts. Disclosed embodiments are not limited to the specific details of construction and the arrangement of components set forth in the description or illustrated in the drawings. Disclosed concepts may be implemented by other implementations, and of being practiced or of being carried out in various ways, which now would become apparent to one skilled in the art.

None of the description in the present application should be read as implying that any particular element, step, act, or function is an essential element, which must be included in the claim scope: the scope of patented subject matter is defined only by the allowed claims. Moreover, none of these claims are intended to invoke a means plus function claim construction unless the exact words "means for" are followed by a participle.

### LISTING OF DRAWING ELEMENTS

100 cement process plant
102 cement preheater
104 kiln
106 clinker cooler
108 supplementary firing provision
110 preheater WHR unit
112 WHR unit with burner
114 damper
116 steam turbine
118 exhaust stack
120 absorption unit
122 desorption unit
124 preheat exhaust flow
126 cooled preheat exhaust flow
128 first steam flow
130 second steam flow
132 third steam flow
134 CC exhaust
136 carbon dioxide gas
138 gas conditioning tower
140 raw mill dryer
142 CC outlet
144 de-duster
146 exhaust piping
148 carbon capture process
150 first water flow
152 PCE
154 ID fan
156 exhaust gas
158 pump
160 control valve
162 post desorption water flow
164 WHR exhaust
166 post absorption exhaust
168 generator
202 intermediate steam flow
204 high pressure steam flow
302 mid-point outlet
304 mid-point CC exhaust
602 secondary exhaust

## Claims

1. A waste heat recovery system for use with a cement production process (100) comprising:
a cement process preheater (102) configured to discharge a first recovery flow (124),
a clinker cooler (106) configured to discharge a second recovery flow (134),
a carbon capture process (148) configured to extract CO₂ from at least the first recovery flow (124),
a first waste heat recovery unit (110) configured to receive a first fluid flow (150),
a second waste heat recovery unit (112) configured to receive a second fluid flow (150),
the first waste heat recovery unit (110) configured to receive the first recovery flow (124) and heat the first fluid flow (150),
the second waste heat recovery unit (112) configured to receive the second recovery flow (134) and heat the second fluid flow (150),
the first heat recovery unit (110) configured to receive the first fluid flow (150) and output a first steam flow (128),
the second heat recovery unit (112) configured to receive the second fluid flow (150) and output a second steam flow (130),
a steam turbine (116) configured to receive at least the second steam flow (130),
the steam turbine (116) configured to output a third steam flow (132),
the steam turbine (116) configured to produce at least 100% of the electrical energy requirements of the carbon capture process (148) by spinning a generator (168) and at least 80% of the heat energy requirements of the carbon capture process (148) from the third steam flow (132).

2. A waste heat recovery system for use with a cement production process (100) comprising:
a cement process preheater (102) configured to discharge a first recovery flow (124),
a clinker cooler (106) configured to discharge a second recovery flow (134),
a carbon capture process (148) configured to extract CO₂ from at least the first recovery flow (124),
a second waste heat recovery unit (112) configured to receive a second fluid flow (150),
the second waste heat recovery unit (112) configured to receive the second recovery flow (134) and heat the second fluid flow (150),
the second waste heat recovery unit (112) configured with a supplementary firing provision (108),
the second heat recovery unit (112) configured to receive the second fluid flow (150) and output a second steam flow (130),
a steam turbine (116) configured to receive at least the second steam flow (130),
the steam turbine (116) configured to output a third steam flow (132),
the steam turbine (116) configured to produce at least 100% of the electrical energy requirements of the carbon capture process (148) by spinning a generator (168) and at least 80% of the heat energy requirements of the carbon capture process (148) from the third steam flow (132).

3. The waste heat recovery system of claim 1 wherein the second waste heat recovery unit (112) further comprises a supplementary firing provision (108).

4. The waste heat recovery system of any of the preceding claims wherein the second recovery flow (134) is at a temperature between 260-380°C.

5. The waste heat recovery system of any of the preceding claims wherein the second waste heat recovery (112) unit produces high pressure and super heated steam.

6. The waste heat recovery system of any of the preceding claims wherein the second waste heat recovery unit (112) is configured to receive the first steam flow (202),
and an amount of fuel required by the supplementary firing provision (108) to produce the second steam flow (204) is supplemented by the heat energy of the first steam flow (202).

7. The waste heat recovery system of claim 5 wherein the steam turbine (116) is configured to receive the first steam flow (128) at a first temperature and a first pressure, and
the steam turbine (116) is configured to receive the second steam (130) flow at a second temperature and a second pressure.

8. The waste heat recovery system of any of the preceding claims wherein the supplementary firing provision (108) is firing a carbonized fuel, and the carbon capture process (148) extracts carbon dioxide from the WHR exhaust (164) of the second waste heat recovery unit (112).

9. The waste heat recovery system of any of the preceding claims wherein the supplementary firing provision (108) is firing a non-carbon emission producing fuel and the WHR exhaust (164) of the second waste heat recovery unit (112) is vented to a secondary exhaust stack (602).

10. The waste heat recovery system of any of the preceding claims wherein the clinker cooler (106) further comprises a mid-point outlet (302) configured to provide the second heat recovery unit (112) with the second recovery flow (304).

11. The waste of claim 10 wherein the second recovery flow (304) is at a temperature between 300-600°C.

12. The waste heat recovery system of any of the preceding claims wherein a de-duster (144) conditions the second recovery flow (134) prior to entering the second waste heat recovery unit (112).

13. The waste heat recovery system of any of the preceding claims further comprising a plurality of dampers (114) configured to control the first recovery flow (124) and the second recovery flow (134), as required by the carbon capture process (148).

14. The waste heat recovery system of any of the preceding claims wherein the carbon capture process (148) further comprises a sorbent media that undergoes an absorption cycle to capture CO₂ and a desorption cycle to release and capture the CO₂ from the sorbent media.

15. A method for waste heat recovery and carbon capture for use with a cement process plant (100) consisting of the steps of:
configuring a cement preheater (102) to output a first recovery flow (124),
configuring a clinker cooler (106) to output a second recovery flow (134) to a second waste heat recovery unit (112),
configuring a carbon capture process (148) to capture CO₂ from at least the first recovery flow (124),
configuring the second waste heat recovery unit (112) to heat a second fluid flow (150) and output a second steam flow (130),
configuring a steam turbine (116) to receive at least the second steam flow (130) and generate all of the electrical requirements of a carbon capture process (148) by spinning a generator (168),
configuring the steam turbine (116) to output a third steam flow (132),
providing at least 80% of the heat energy requirements of the carbon capture process (148) from the third steam flow (132).

16. The method of claim 15 further comprising the steps of:
configuring the cement preheater (102) to output the first recovery flow (124) to a first waste heat recovery unit (110),
configuring the first waste heat recovery unit (110) to heat a first fluid flow (150) and output a first steam flow (202),
wherein the second waste heat recovery unit (112) is configured to receive the first steam flow (202),
and an amount of fuel required by the supplementary firing provision (108) to produce the second steam flow (204) is supplemented by the heat energy of the first steam flow (202).

17. The method of claim 15 further comprising the steps of:
configuring the cement preheater (102) to output the first recovery flow (124) to a first waste heat recovery unit (110),
configuring the first waste heat recovery unit (110) to heat a first fluid flow (150) and output a first steam flow (128),
configuring the steam turbine (116) to receive the first steam flow (128) at a first temperature and a first pressure, and
configuring the steam turbine (116) to receive the second steam (130) flow at a second temperature and a second pressure.
